# EUROPEAN PATENT SPECIFICATION

(11) **EP 4 073 184 B1**
(45) Date of publication and mention of the grant of the patent: **11.03.2026**
(21) Application number: 20824703.1
(22) Date of filing: 11.12.2020
(51) Int. Cl.: C09D 175/04, C09D 175/06, C09J 175/04, C09J 175/06, C08G 18/22, C08G 18/40, C08G 18/66, C08G 18/73, C08G 18/75, C08G 18/10, C08G 18/12, C08G 18/48, C08G 18/42, C08G 18/72, C08J 5/18

(54) **PREPARATION OF A COATING, ADHESIVE, FILM OR SHEET**
HERSTELLUNG EINER BESCHICHTUNG, EINES KLEBSTOFFES, FILMS ODER PLATTE
PRÉPARATION D'UN REVÊTEMENT, D'UN ADHÉSIF, D'UN FILM OU D'UNE FEUILLE

(30) Priority: 12.12.2019 NL 2024438
(43) Date of publication of application: 19.10.2022
(73) Proprietor: Stahl International B.V., 5145 PE Waalwijk (NL)
(72) Inventor: JIMENEZ MARTINEZ, Mario, 5145 PE Waalwijk (NL); BROUWER, Freerk, 5145 PE Waalwijk (NL)
(74) Representative: V.O.
(86) International application number: PCT/NL2020/050777
(87) International publication number: WO 2021/118354

(56) References cited:
- EP-B1- 1 233 991
- US-A1- 2014 350 177
- US-A1- 2017 008 997
- DATABASE WPI Week 201656, Derwent World Patents Index; AN 2016-260528, XP002799739

## Description

The present invention concerns a process for preparing a coating, adhesive, film or sheet, the thus obtained products and the formulation mixture to be used in the process The invention is set out in the appended set of claims.

Several methods have been developed for high solids or solvent free application in the polyurethane industry to prepare coatings or films.

One approach is the reaction of a polyisocyanate or of an isocyanate functional polyurethane prepolymer with a polyol. In this way flexible coatings can be prepared with a medium strength. A disadvantage of this method is that the pot life of the mixture is limited to a few hours.

Further, while a reaction within 2 to 3 min is required, there is only a partial reaction within that time period and a post reaction takes continuously place between the unreacted components during storage at ambient temperature. Consequently, the coatings are sometimes tacky immediately after the curing and, for example, a coated piece of textile cannot be rolled up.

A second approach is the reaction between a blocked polyisocyanate and a polyamine or polyol. Especially with polyamines strong films can be obtained. When the blocking agent is a ketoxime, such as butanone oxime, it will evaporate during the reaction, but usually some of the butanone oxime will stay inside the layer. The result is that, also after application, there may be a release of toxic vapours and the coating smells. Other types of blocking agents, such as dimethylpyrazole and triazole types, malonic esters or acetoacetates, and ε-caprolactams need a long deblocking time and they will partially stay in the coating as not-polymerized molecules. Also in these cases the coating layers have a residual smell.

A further possibility is the combination of a polyisocyanate and a polyamine of which the amine functions are deactivated by the reaction with a maleic ester under formation of an aspartate. In spite of the deactivation of the amine functions, the combination with a polyisocyanate will have a too limited pot life.

An alternative method is the use of internally blocked polyisocyanates which act as crosslinkers mainly in powder coatings. In this method an incorporated uretdion acts as internal blocking agent. At prolonged heating the uretdion unblocks under formation of two isocyanate functions, which further react with a material containing reactive hydrogen. The curing time at 180°C is at least 15 min, which is an unacceptable long time for most applications.

All these systems have some negative aspects such as a too short pot life, a too long reaction time and/or the evaporation of toxic vapours.

EP 1233991 describes a process for the preparation of coatings in which a mixture of a polyisocyanate-, polyepoxide-, polyanhydride-, or polyketone-functional compound and a compound containing reactive hydrogen (proton source), which mixture is not reactive at room temperature, is applied onto a substrate, whereafter the mixture reacts at elevated temperatures. The compound containing reactive hydrogen is a solid, which may be present in the mixture as a fine powder or as a dispersion in a medium.

EP 1423446 describes the use of crystalline dihydrazides in combination with liquid isocyanate functional prepolymers, which can be reacted within a few minutes at 140°C to 180°C, wherein a first reactive system is reacted without a substantial reaction occurring of the second reactive system and subsequently a second reactive system is reacted at higher temperatures.

EP 1425327 describes the use of crystalline dihydrazides in combination with liquid isocyanate functional prepolymers, which can be reacted within a few minutes at 140°C to 180°C, wherein the reaction temperature and consequently the reaction rate can be adjusted as desired by the addition of an additive to the coating mixture, or to one of the reactants of the coating mixture, prior to the mixing with the other component.

Neither EP 1233991, nor EP 1423446, nor EP 1425327 mention anywhere the benefits of using components having a substantial amount of new carbon. All examples in these three publications employ petroleum-derived components in the preparation of the coatings.

Additionally, there continues to be a need for coatings, adhesives, films or sheets made from biobased materials instead of petroleum-based materials. This work, especially, provides a new way of utilizing renewable, biobased resources to prepare environmentally friendly products with high performance for application as coating, adhesive, film or sheet. There is currently a big driving force for companies, and the chemical industry in particular, for corporate responsibility and the use of sustainable or renewable sources of raw materials.

In this regard, biobased materials may be differentiated from petroleum derived materials, for example, by their carbon isotope ratios using ASTM International Radioisotope Standard Method D6866. Completely biobased materials may have a 100% biobased carbon isotope ratio. According to certain embodiments, biobased materials may have from 1% to 99.9% biobased carbon isotope ratio. The carbon isotope ratio, as determined, for example, by ASTM International Radioisotope Standard Method D6866, is indicative of a composition composed, in whole or in significant part, of biological products or renewable agricultural materials (including plant, animal and marine materials) or forestry materials. ASTM D6866 reports the percentage of bio-based carbon content relative to total carbon, and not to total mass of the sample or molecular weight. As used herein, the term "petroleum derived" means a product derived from or synthesized from petroleum or a petrochemical feedstock or other fossil feedstock.

EP 2697062 describes mono and multi-layer films as flexible barrier package having a bio-based content of about 10% to about 100% using ASTM D6866, but the focus is on a blend of Low Density Polyethylene (LDPE) and Linear Low Density Polyethylene (LLDPE).

EP 2918633 describes a thermoplastic resin composition for use as a vehicle interior material with modern carbon amount of 15 wt% to 35 wt%, as measured in accordance with ASTM D6866, but the resin composition is based on biomass-derived polyethylene.

WO 2018108609 describes the preparation of a polymer to be used as a thickening agent comprising from 28 wt% to 100 wt% bio-based carbon content, relative to the total mass of carbon in its repeating unit, measured according to standard ASTM D6866, but the polymer is a polyacrylate.

US 2012116004 describes a process for making a biobased waterborne polyurethane/acrylic hybrid latex, wherein it includes by at least 50% of biobased carbon as determined by ASTM D6866, but the latex is a polyurethane/polyacrylate dispersion.

US 2013131222 describes polyurethane polymers comprising as part of its polymer backbone biobased ω-hydroxyfatty acids or derivatives thereof, and processes for the preparation thereof. The focus is on the method to prepare the various biobased ω-hydroxyfatty acids or derivatives. The polyurethanes made therefrom are prepared using also chain extenders, such as short diols and short amines or hydrazides, but these chain extenders are not present as a dispersion or as a fine powder, and hence it is not the case that such mixture would be not or low-reactive at room temperature.

US 2017/008997 describes an aqueous polyurethane dispersion of solids content 10 to 80 wt%, preferably 20 to 60 wt%, more preferably 25 to 50 wt% comprising particles of a polyurethane dispersed in a dispersing medium, primarily water, wherein the polyurethane is obtainable by reacting a polyol and an isocyanate, wherein the polyol comprises at least one dimer fatty residue selected from a dimer fatty diacid residue, a dimer fatty diol residue and a dimer fatty diamine residue; and at least one furan dicarboxylic acid residue. The furan dicarboxylic acid residue is preferably derived from renewable and/or bio-based sources; the renewable carbon content of said furan dicarboxylic acid residue is at least 50 % determined using ASTM D6866, preferably at least 65 wt% or even 80 wt%. The polyurethane dispersion is preferably derived from renewable and/or biobased sources and has a renewable carbon content of at least 50%, preferably at least 65% or 80% as determined using ASTM D6866.

It is desirable to prepare a coating, adhesive, film or sheet from high solids or water free or solvent free components, which have a substantial amount of new carbon without detrimental effect on the other properties of the coating, adhesive, film or sheet. Consumers are very interested in "natural" products including products with a high percentage of "natural" compounds and/or compounds that help to reduce fossil depletion, reduce our carbon dioxide footprint and are derived from renewable materials.

The object of the present invention is to provide a process for preparing a coating, adhesive, film or sheet, to the thus obtained products and to the formulation mixture to be used in the process, which is more environmentally friendly and has a smaller carbon footprint than the prior art process, products, formulation mixture without any detrimental effect on any of the properties (and in some cases even improvement of some properties) of the obtained coating, adhesive, film or sheet. The present invention takes advantage of the invention described in EP 1233991.

Accordingly, the present invention provides a process for the preparation of a coating, coated substrate, adhesive, film or sheet, in which process a formulation mixture, having a high content of non-volatile organic compounds above 80%, comprising a reactive system of a polyisocyanate-functional, compound or polymer and a dispersion or fine powder of a compound containing reactive hydrogen selected from a polyhydrazide and/or polysemicarbazide and/or piperazine, which mixture is not or low-reactive at room temperature, is applied onto a substrate, generally at a temperature in the range of 10 to 50°C, preferably at RT, resulting in a substrate coated with the formulation mixture, followed by reacting the compounds mentioned above by elevating the temperature, wherein more than 40% of the carbon in the combined amount of the formulation mixture is modern carbon according to ASTM D6866. Preferably, even more of the carbon in the combined amount of the formulation mixture is modern carbon according to ASTM D6866, such as more than 45% or even more preferably, more than 50% of the carbon in the combined amount of the formulation mixture is modern carbon according to ASTM D6866.

The isocyanate functional compound or polymer which is used in the process of the present invention is preferably an isocyanate functional polyurethane prepolymer obtained by reacting a stoichiometric excess of a polyisocyanate with an isocyanate-reactive compound or mixture of isocyanate-reactive compounds, in particular polyols.

The formulation mixture preferably does not contain any (aqueous) polyurethane dispersion nor any water. Further the formulation mixture has a high content of non-volatile organic compounds above 80 %, preferably above 85 % or even 90 %, more preferably about 100 %. A volatile organic compound (VOC) being defined as any organic compound having an initial boiling point less than or equal to 250 °C measured at a standard atmospheric pressure of 101.3 kPa.

Preferably, the compound containing the reactive hydrogen is a compound which is crystalline at a temperature below 30°C. The compound maintains its crystalline form after grinding or dispersing it in a non-reactive material.

Preferably, the compound containing reactive hydrogen is adipic acid dihydrazide and/or malonic acid dihydrazide and/or carbodihydrazide.

Preferably, the polyhydrazide- or polysemicarbazide functional compound and/or carbodihydrazide are present in the mixture as a fine powder or as dispersion in a material that is non-reactive towards the hydrazide or semicarbazide function. This is favourable for reasons described in EP 1233991.

Preferably, the material that is non-reactive towards the hydrazide or semicarbazide function contains modern carbon according to ASTM D6866, such as, for example, castor oil, di(2-ethylhexyl) succinate, dimethylsebacate, dibutylsebacate, dioctylcarbonate and tri-esters of citric acid.

Preferably, the temperature at which the polyisocyanate-functionalcompound or polymer and the compound containing reactive hydrogen, are reacted is between 110°C and 180°C, more preferably between 120°C and 170°C.

In the context of the present invention, the term 'not or low reactive at room temperature' means that the formulation mixture comprising a reactive system of a polyisocyanate-functionalcompound or polymer and a dispersion or fine powder of a compound containing reactive hydrogen does not react at ambient temperatures or reacts only very slowly at ambient temperature in a manner that the viscosity of the mixture remains similar or that the increase in viscosity is limited to doubling of the original viscosity of the fresh formulation mixture after 8 hours.

In the context of the present invention, the dispersion or fine powder of a compound containing reactive hydrogen is obtained by dispersing the material containing reactive hydrogen, in the second material by conventional methods which may be done by, for example, a disperser or a pearl mill. The performance of the films or coatings will be better when the particle size of the material containing reactive hydrogen, is small. An excellent film or coating quality is obtained when the particle size is between 0.5 and 200 micron. A more preferable particle size is between 0.5 and 60 micron and the most preferable size is between 0.5 and 15 micron.

The polyisocyanate functional compound or polymer are prepared such that they contain modern carbon according to ASTM D6866. This can be achieved by using monomers that have a biomass origin, such as biological products or renewable agricultural materials (including plant, animal and marine materials) or forestry materials, such as vegetable oil-based polyols, vegetable oil-based diisocyanates, sugar-based polyols, amino-acid-based diisocyanates, amino-acid-based polyols. Examples of such monomers, provided that they have a biomass origin, because these monomers could also be synthesized from petroleum or a petrochemical feedstock, are pentamethylene diisocyanate, 3-isocyanatomethyl-3,5,5-trimethylcyclohexylisocyanate, tetramethylene diisocyanate, isocyanate-functional oligomers such as Tolonate X-Flo 100 (obtainable from Vencorex), dimer fatty acid based diisocyanates such as DDI 1410 (obtainable from BASF), ethyl ester L-Lysine diisocyanate, polytrimethylene ether polyol (PO3G) from bio-derived propanediol (such as Cerenol from DuPont Tate & Lyle, Velvetol from Allyssa Chemical or Ecoprol from SK Chemicals), polyols derived from fatty acids (such as Priplast and Pripol from Croda, Sovermol and Lupranol Balance from BASF, Elevance C18 Polyols from Elevance Renewable Sciences, Radia from Oleon, BiOH from Cargill, Relca Bio PO from Stahl Polymers), castor oil-based polyols (such as Albodur from Alberdingk Boley or Castor Polyol 114 and Castor Polyol 115 from Castor International), polyester polyols derived from succinic acid (such as EG-110 and DGTA-56 from GC Innovations, Bio-Hoopol from Synthesia Technology), polyester polyols derived from sebacic acid (such as Polyol P-2050 from Kuraray), polyester polyols derived from azelaic acid (such as Emerox from Emery Oleochemicals), bio-based polycarbonate polyols (such as BENEBiOL from Mitsubishi Chemicals and certain PCDX-types from Asahi Kasei). Alternatively, also polyols synthesized from captured carbon dioxide may be employed, which will contain modern carbon according to ASTM D6866 if the source of the carbon dioxide is, in whole or in significant part, of biological products or renewable agricultural materials (including plant, animal and marine materials) or forestry materials. An extensive overview on the various polyols from renewable resources is given in Chapter 7 of the book 'Chemistry and Technology of Polyol for Polyurethanes 2nd edition', volume 2, by Mihail Ionescu, from 2016, ISBN 978-1-91024-298-8.

Preferably, the polyisocyanate functional compound or polymer are prepared using one or more polyol components that contain modern carbon according to ASTM D6866, because the total of polyol components comprise usually the largest weight parts in the polyisocyanate functional compound or polymer. Preferred polyol components are bio-based polyols derived from fatty acids, which has the additional advantage that the resulting cured coating, film or sheet from the formulation mixture made with the compound or polymer has hydrophobic properties and has better hydrolysis resistance compared to polyester polyols derived from shorter carbon chains. Especially preferred is the use of a combination of types of polyol components in order to obtain beneficial properties of each type in order to overcome potential disadvantageous properties of the individual polyol components, such as, for example, good hydrolysis resistance and poor light stability and poor abrasion resistance for polyether polyols and poor to modest hydrolysis resistance and good light stability and good abrasion resistance for polyester polyols.

Preferably the amount of polyester polyols, in particular bio-based polyester polyols in the total amount of polyol compounds used in the preparation of the polyisocyanate functional compound or polymer is below 90 wt%, preferably below 70 wt%. Further the amount of polyester polyols, in particular bio-based polyester polyols in the total amount of polyols compounds used is preferably at least 10 wt%. Using an amount of polyester polyols, in particular bio-based polyester polyols such as bio-based polyester polyols derived from fatty acids, within this range provides improved hydrolysis resistance.

A preferred combination of polyol types to be used in the preparation of the polyisocyanate functional compound or polymer is a combination of polyether polyol, in particular bio-based polyether polyol, and polyester polyol, in particular bio-based polyester polyols, in weight ratio between 90/10 to 10/90, more preferred in weight ratio between 70/30 to 30/70, most preferred in weight ratio between 65/35 and 35/65.

In a manner similar as described in EP 1233991 all the necessary and for the coating relevant additives that are preferred for the application and properties may be present in the formulation mixture, such as fillers, colorants, pigments, silicones, fire retardants, matting agents, flow agents, foaming agents, plasticizers, viscosity modifiers, levelling agents, adhesion promoters, rheology modifiers, ultra-violet (UV) absorbers, hindered amine light stabilizers (HALS), texture-enhancing additives such as silica or waxes or polymeric beads to improve the surface feel of the coating. The above mentioned additives can also be used to increase the amount of modern carbon according to ASTM D6866 in the coating, coated substrate, adhesive, film or sheet, provided that they contain such modern carbon according to ASTM D6866.

If so desired, an amount of solvent or plasticizer may be added to the polyisocyanate functional compound or polymer, which may be desired to reduce the viscosity of the polyisocyanate functional functional compound or polymer. But it is preferred that no solvent is added, so that the complete formulation mixture does not contain solvent and is thus free of volatile organic compounds (VOC).

The polyisocyanate functional compound or polymer may also be converted such that the functional group becomes blocked (referred to herein after as blocked prepolymer or blocked polymer). In case of an isocyanate functional group this can be achieved with blocking agents such as a ketoxime, such as butanone oxime or acetone oxime, or dimethylpyrazole and triazole types, malonic esters or acetoacetates, or ε-caprolactams. Such a blocked prepolymer or blocked polymer, in which the isocyanate functional groups have been blocked, can also be employed in the context of the present invention which then results in a process for the preparation of a coating, coated substrate, adhesive, film or sheet, in which process a formulation mixture comprising a reactive system of a blocked prepolymer or blocked polymer, in which the isocyanate functional groups have been blocked, and a dispersion or fine powder of a compound containing a reactive hydrogen, which mixture is not or low-reactive at room temperature, is applied onto a substrate, resulting in a substrate coated with the coating mixture, followed by reacting the compounds mentioned above by elevating the temperature to a temperature high enough to deblock the blocked prepolymer or blocked polymer to liberate the isocyanate groups so that the isocyanate groups can react with the compound containing a reactive hydrogen, wherein more than 40% of the carbon in the combined amount of the formulation mixture is modern carbon according to ASTM D6866.

The formulation mixture may be applied to various substrates and various techniques may be used. Some applications where the process of the invention is used are of special interest. For example, the process may be used for the preparation of a coated textile to be used for upholstery, fashion articles or shoes, which can be in the form of a synthetic leather. Such a process may comprise the preparation of an adhesion coat onto a support e.g. a fabric, followed by applying the formulation mixture of the present invention onto the adhesion coat and curing of this mixture at an elevated temperature, which may be between 80°C and 250°C, whereafter optionally a lacquer layer is applied. The coating may further be embossed at 80°C to 250°C. Alternatively a transfer coating process may be used for the preparation of a coated substrate to be used for upholstery, fashion articles or shoes, which can be in the form of a synthetic leather, which may comprise the preparation of a pre-skin coat onto a carrier, such as release paper, followed by the preparation of an intermediate coat by applying a mixture of the present invention onto the pre-skin coat and curing of this mixture at an elevated temperature, which may be between 80°C and 250°C, whereupon an adhesive coat is applied onto the intermediate coat in which a support e.g. a fabric is laminated and the thus obtained material is dried and cured, and subsequently the carrier is peeled off, and then optionally a lacquer layer is applied on top of the pre-skin layer. Examples of substrates are thermoplastic urethane (TPU), synthetic leather, natural leather, finished natural leather, urethane elastomers, synthetic textiles and natural textiles, coated leather, coated polyvinyl chloride, coated non-woven, coated coagulated polyurethane substrates, polypropylene, polyethylene terephthalate, polyolefines, modified polyolefins, laminated structures and foam, which can be a polymeric or natural material comprising open cell foam and/or closed cell foam.

The present invention will be further elaborated by the following non-limiting working examples, executed according to procedures known in the art.

### EXAMPLES

### Example 1: Preparation of an isocyanate functional polyurethane prepolymer

Under a nitrogen atmosphere, 152.7 g (688 mmol) 3-isocyanatomethyl-3,5,5-trimethylcyclohexylisocyanate (in the following indicated as IPDI) and 80.0 g (381 mmol) 2,2,4-trimethyl hexamethylene diisocyanate (in the following indicated as TMDI) were added to a mixture at 70°C of 359.3 g (180 mmol) of Relca Bio PO 2056 (bio-polyester with a molecular weight of 2000; obtainable from Stahl Polymers), 160.0 g (160 mmol) of Velvetol H1000 (a bio-polyether polyol with a molecular weight of 1000; obtainable from Allyssa Chemical) and 48.0 g (329 mmol) of 2,2,4-trimethyl pentanediol, while stirring. Next, 0.05 g of K-Kat 348 (obtainable from King Industries) was added as a catalyst. The mixture was maintained at 100°C and was reacted for three hours at this temperature under formation of a polyurethane prepolymer. The reaction mixture was cooled down. The remaining NCO-content was measured and was 3.98%.

### Example 2: Preparation of an isocyanate functional polyurethane prepolymer

Under a nitrogen atmosphere, 151.8 g (684 mmol) IPDI and 80.0 g (381 mmol) TMDI were added to a mixture at 70°C of 360.2 g (180 mmol) of Relca Bio PO 1056 (bio-polyester with a molecular weight of 2000; obtainable from Stahl Polymers), 160.0 g (160 mmol) of Velvetol H1000 (a bio-polyether polyol with a molecular weight of 1000; obtainable from Allyssa Chemical) and 48.0 g (329 mmol) of 2,2,4-trimethyl pentanediol, while stirring. Next, 0.05 g of K-Kat 348 (obtainable from King Industries) was added as a catalyst. The mixture was maintained at 100°C and was reacted for three hours at this temperature under formation of a polyurethane prepolymer. The reaction mixture was cooled down. The remaining NCO-content was measured and was 3.84%.

### Example 3: Preparation of an isocyanate functional polyurethane prepolymer

Under a nitrogen atmosphere, 163.6 g (737 mmol) IPDI and 89.6 g (427 mmol) TMDI were added to a mixture at 70°C of 498.8 g (249 mmol) of Relca Bio PO 1056 (bio-polyester with a molecular weight of 2000; obtainable from Stahl Polymers) and 48.0 g (329 mmol) of 2,2,4-trimethyl pentanediol, while stirring. Next, 0.01 g of K-Kat 348 (obtainable from King Industries) was added as a catalyst. The mixture was maintained at 100°C and was reacted for one hour at this temperature under formation of a polyurethane prepolymer. The reaction mixture was cooled down. The remaining NCO-content was measured and was 5.73%.

### Example 4: Preparation of an isocyanate functional polyurethane prepolymer

Under a nitrogen atmosphere, 162.9 g (734 mmol) IPDI and 89.6 g (427 mmol) TMDI were added to a mixture at 70°C of 355.5 g (178 mmol) of Relca Bio PO 1056 (bio-polyester with a molecular weight of 2000; obtainable from Stahl Polymers), 144.0 g (72 mmol) of Velvetol H2000 (a bio-polyether polyol with a molecular weight of 2000; obtainable from Allyssa Chemical) and 48.0 g (329 mmol) of 2,2,4-trimethyl pentanediol, while stirring. Next, 0.01 g of K-Kat 348 (obtainable from King Industries) was added as a catalyst. The mixture was maintained at 100°C and was reacted for one hour at this temperature under formation of a polyurethane prepolymer. The reaction mixture was cooled down. The remaining NCO-content was measured and was 5.65%.

### Example 5: Preparation of an isocyanate functional polyurethane prepolymer

Under a nitrogen atmosphere, 178.6 g (805 mmol) IPDI and 112.0 g (381 mmol) TMDI were added to a mixture at 70°C of 293.4 g (309 mmol) of Bio-Hoopol 11920 (bio-polyester with a molecular weight of 950; obtainable from Synthesia Technology), 160.0 g (160 mmol) of Velvetol H1000 (a bio-polyether polyol with a molecular weight of 1000; obtainable from Allyssa Chemical) and 56.0 g (384 mmol) of 2,2,4-trimethyl pentanediol, while stirring. Next, 0.05 g of K-Kat 348 (obtainable from King Industries) was added as a catalyst. The mixture was maintained at 80°C and was reacted for three hours at this temperature under formation of a polyurethane prepolymer. The reaction mixture was cooled down. The remaining NCO-content was measured and was 5.10%.

### Example 6: Preparation of an isocyanate functional polyurethane prepolymer

Under a nitrogen atmosphere, 207.1 g (1233 mmol) of hexamethylene diisocyanate was added to a mixture at 70°C of 288.9 g (289 mmol) of Relca Bio PO 1120 (bio-polyester with a molecular weight of 1000; obtainable from Stahl Polymers), 256.0 g (256 mmol) of Velvetol H1000 (a bio-polyether polyol with a molecular weight of 1000; obtainable from Allyssa Chemical) and 48.0 g (329 mmol) of 2,2,4-trimethyl pentanediol, while stirring. Next, 0.01 g of K-Kat 348 (obtainable from King Industries) was added as a catalyst. The mixture was maintained at 80°C and was reacted for two hours at this temperature under formation of a polyurethane prepolymer. The reaction mixture was cooled down. The remaining NCO-content was measured and was 4.82%.

### Example 7: Preparation of films and measuring modern carbon content according to ASTM D6866

50 g of the product of Examples 1 to 6 were each mixed with an stoichiometric amount (with respect to the remaining NCO content) of a 1: 1 dispersion of adipic dihydrazide in castor oil. Films of a thickness of 200 µm were prepared and they were heated for 2 min at 160°C. The films obtained were flexible and dry (non-tacky).

The content of modern carbon according to ASTM D6866 was measured to be 53% for the film from Example 1, 52% for the film made from Example 2, 45% for the film made from Example 3, 50% for the film made from Example 4, 44% for the film made from Example 5, 57% for the film made from Example 6.

### Comparative Example 8: Preparation of an isocyanate functional polyurethane prepolymer

Under a nitrogen atmosphere, 192 g (1142 mmol) hexamethylene diisocyanate was added to a mixture at 70°C of 304 g (304 mmol) of Voranol PPG1000 (polypropylene glycol with a molecular weight of 1000; obtainable from Dow), 80 g (40 mmol) of Voranol PPG2000 (polypropylene glycol with a molecular weight of 2000; obtainable from Dow), 4.0 g (30 mmol) of trimethylolpropane, 16 g (154 mmol) of 2,2-dimethyl-1,3-propanediol and 204 g (219 mmol) of Hoopol S1015-120 (a polyester, obtainable from Synthesia), while stirring. Next, 0.01 g of K-Kat 348 (obtainable from King Industries) was added as a catalyst. The mixture was maintained at 100°C and was reacted for one hour at this temperature under formation of a polyurethane prepolymer. The reaction mixture was cooled down. The remaining NCO-content was measured and was 3.85%.

### Comparative Example 9: Preparation of an isocyanate functional polyurethane prepolymer

Under a nitrogen atmosphere, 186 g (1106 mmol) hexamethylene diisocyanate was added to a mixture at 70°C of 48 g (24 mmol) of Voranol PPG2000 (polypropylene glycol with a molecular weight of 2000; obtainable from Dow), 4.0 g (30 mmol) of trimethylolpropane, 8 g (77 mmol) of 2,2-dimethyl-1,3-propanediol and 554 g (595 mmol) of Hoopol S1015-120 (a polyester, obtainable from Synthesia), while stirring. Next, 0.01 g of K-Kat 348 (obtainable from King Industries) was added as a catalyst. The mixture was maintained at 100°C and was reacted for one hour at this temperature under formation of a polyurethane prepolymer. The reaction mixture was cooled down. The remaining NCO-content was measured and was 3.70%.

### Example 10: hydrolysis resistance tests

Films were made of the product of Examples 1 to 6, as described in the first part of Example 7. In a similar manner, films were made of the products of Comparative Example 8 and Comparative Example 9. Mechanical properties of the films were measured with a dynamometer model AG/MC from Acquati Guiseppe, before and after hydrolysis test. Hydrolysis test was done according to ISO-1419 method C by subjecting specimens to a temperature of 70°C and 95% relative humidity during 28 days. The value at M-100, expressed in MPa (10⁶ N/m²), is the strain of the film when stretched at 100%. If a film becomes too weak upon hydrolysis, then this will be made apparent when comparing the M-100 value before and after hydrolysis.

The results are collected in the Table below.

| Film from Example | M-100 original (MPa) | M-100 after hydrolysis test for 28 days, in % vs M-100 original | % Polyester on total of polyols |
|---|---|---|---|
| 1 | 1.4 | 150 | 63 |
| 2 | 0.7 | 150 | 63 |
| 3 | 3.1 | 84 | 91 |
| 4 | 2.5 | 104 | 64 |
| 5 | 1.8 | 94 | 57 |
| 6 | 1.5 | 147 | 49 |
| Comp. 8 | 1.1 | 164 | 34 |
| Comp. 9 | 2.7 | 60 | 90 |

Films from Examples 1 to 6 and from the Comparative Example 8 remained a film upon the completion of the hydrolysis test and did not deteriorate too much, and the M-100 could be measured after hydrolysis test. The film from Comparative Example 9 had deteriorated more upon the hydrolysis test and only 60% of the original M-100 remained. Examples 1, 2, 4 and 6 were made with between 49 weight% and 64 weight% of the total mass of polyol components consisting of biobased-fatty-acid based polyester polyol. Example 3 was made with 91 weight% of the total mass of polyol components consisting of biobased-fatty-acid based polyester polyol. Comparative Example 8 was made with 34 weight% of the total mass of polyol components consisting of polyester polyol from hexane-diol, 2,2-dimethyl-1,3-propanediol and hexanedioic acid. Comparative Example 9 was made with 90 weight% of the total mass of polyol components consisting of polyester polyol from hexane-diol, 2,2-dimethyl-1,3-porpanediol and hexanedioic acid.

The hydrolysis resistance of the film from Example 3 is better than the hydrolysis resistance of the film from Comparative Example 9, although the weight% of the polyester on the total mass of polyol components is similar, while the polyester in Example 3 is a biobased-fatty-acid based polyester polyol.

The hydrolysis resistances of films from Examples 1, 2, 4 and 6 were good and also the hydrolysis resistance of Comparative Example 8 was good, although the weight% of the polyester on the total mass of polyol components was higher, being between 49 weight% and 64% weight% for Examples 1, 2, 4 and 6, than in Comparative Example 8, which was only 34 weight%, while the polyester in Example 1, 2, 4 and 6 is a biobased-fatty-acid based polyester polyol.

### Example 11: Preparation of a blocked isocyanate functional polyurethane prepolymer

Under a nitrogen atmosphere, 195.0 g (1161 mmol) of hexamethylene diisocyanate was added to a mixture at 70°C of 257.5 g (257 mmol) of Relca Bio PO 1120 (bio-polyester with a molecular weight of 1000; obtainable from Stahl Polymers), 233.6 g (117 mmol) of Velvetol H2000 (a bio-polyether polyol with a molecular weight of 2000; obtainable from Allyssa Chemical) and 43.8 g (300 mmol) of 2,2,4-trimethyl pentanediol, while stirring. Next, 0.01 g of K-Kat 348 (obtainable from King Industries) was added as a catalyst. The mixture was maintained at 80°C and was reacted for two hours at this temperature under formation of a polyurethane prepolymer. The reaction mixture was cooled down. The remaining NCO-content was measured and was 5.25%. Next, 70.1 g (959 mmol) of acetone oxime was added and the mixture was maintained at 70°C for one hour. The absence of isocyanate signal in the infrared spectrum was checked.

### Example 12: Preparation of film from blocked isocyanate functional polyurethane prepolymer

100 g of the product of Example 11 was mixed with an stoichiometric amount (with respect to the NCO content after deblocking) of 13.1 g of a 1:1 dispersion of adipic dihydrazide in castor oil. Films of a thickness of 250 µm were prepared and heated for 3 min at 190°C. The films obtained were flexible and dry (non-tacky). The M-100 of a fresh film, measured as described in Example 10, was 0.8 MPa.
The hydrolysis resistance was tested in the same manner as described in Example 10. The M-100 of the film after 4 weeks of exposure in the hydrolysis test, was 160% of the original value.
The content of modern carbon according to ASTM D6866 was extrapolated to be 55%, upon comparing the composition with Example 6.

## Claims

1. A process for the preparation of a coating, coated substrate, adhesive, film or sheet, in which process a formulation mixture having a content of non-volatile organic compounds above 80 wt%, preferably at least 90 wt%, comprising a reactive system of a
- polyisocyanate-functional compound or polymer, and
- a dispersion of a compound containing reactive hydrogen in a material which is non-reactive towards the compound containing active hydrogen, or a fine powder of a compound containing reactive hydrogen is applied onto a substrate, resulting in a substrate coated with the formulation mixture, followed by reacting the compounds mentioned above by elevating the temperature, wherein more than 40% of the carbon in the combined amount of the formulation mixture is modern carbon according to ASTM D6866 and wherein volatile organic compounds (VOC) are defined as any organic compound having an initial boiling point less than or equal to 250 °C measured at a standard atmospheric pressure of 101.3 kPa and wherein the compound containing reactive hydrogen is selected from a polyhydrazide and/or polysemicarbazide and/or piperazine.

2. Process according to claim 1, wherein the compound containing the reactive hydrogen is a compound which is crystalline at a temperature below 30°C.

3. Process according to claim 1 or 2, wherein the compound containing reactive hydrogen is adipic acid dihydrazide and/or malonic acid dihydrazide and/or carbodihydrazide.

4. Process according to any one of claims 1 to 3, wherein the material which is non-reactive towards the compound containing reactive hydrogen contains modern carbon according to ASTM D6866, such as castor oil.

5. Process according to any one of claims 1 to 4, wherein the polyisocyanate functional compound or polymer are prepared using one or more polyol components that contain modern carbon according to ASTM D6866.

6. Process according to any one of claims 1 to 5, wherein the polyisocyanate functional compound or polymer are prepared using polytrimethylene ether polyol (PO3G) from bio-derived propanediol, polyols derived from fatty acids, castor oil-based polyols, polyester polyols derived from succinic acid, polyester polyols derived from sebacic acid, polyester polyols derived from azelaic acid or bio-based polycarbonate polyols, polyols synthesized from captured carbon dioxide if the source of the carbon dioxide is, in whole or in significant part, of biological products or renewable agricultural materials or forestry materials, or a combination thereof as one or more polyol components that contain modern carbon according to ASTM D6866.

7. Process according to any one of claims 5 or 6, wherein the one or more polyol components that contain modern carbon according to ASTMD6866 comprises a polyester polyol containing modern carbon according to ASTM D6866 which is present in the total amount of polyols used to prepare the polyisocyanate functional compound or polymer in an amount of below 90 wt%, preferably below 70 wt%.

8. Process according to any one of claims 5, 6 or 7, wherein a combination of polyether polyol preferably containing modern carbon according to ASTM D6866 and polyester polyol containing modern carbon according to ASTM D6866 is used in a weight ratio between 90/10 to 10/90, preferably in a weight ratio between 70/30 to 30/70, more preferably in a weight ratio between 65/35 and 35/65.

9. A process for the preparation of a coating, coated substrate, adhesive, film or sheet, in which process a formulation mixture having a content of non-volatile organic compounds above 80 wt% and comprising a reactive system of a blocked prepolymer or blocked polymer, in which the isocyanate functional groups have been blocked, and a dispersion or fine powder of a compound containing a reactive hydrogen selected from a polyhydrazide and/or polysemicarbazide and/or piperazine is applied onto a substrate, resulting in a substrate coated with the coating mixture, followed by reacting the compounds mentioned above by elevating the temperature to a temperature high enough to deblock the blocked prepolymer or blocked polymer to liberate the isocyanate groups so that the isocyanate groups can react with the compound containing a reactive hydrogen, wherein more than 40% of the carbon in the combined amount of the polymer mixtures is modern carbon according to ASTM D6866 and wherein volatile organic compounds (VOC) are defined as any organic compound having an initial boiling point less than or equal to 250 °C measured at a standard atmospheric pressure of 101.3 kPa.

10. Process according to any one of claims 1 to 9, wherein the temperature is elevated to between 110°C and 180°C, preferably 120°C and 170°C.

11. Process according to any one of claims 1 to 10, wherein the total formulation mixture does not contain solvent and is thus free of volatile organic compounds (VOC).

12. Process according to any one of claims 1 to 11, wherein more than 45% or preferably more than 50% of the carbon in the combined amount of the formulation mixture is modern carbon according to ASTM D6866.

13. Coating, coated substrate, adhesive, film or sheet obtainable by the process as defined in any of claims 1 to 12.

14. A layered structure of which at least one layer comprises a coating, coated substrate, adhesive, film or sheet as defined in claim 13 and optionally comprising one or more layers that do not contain modern carbon according to ASTM D6866.

## Patentansprüche

1. Verfahren zur Herstellung einer Beschichtung, eines beschichteten Substrats, eines Klebstoffs, einer Folie oder eines Blatts, wobei in dem Verfahren ein Formulierungsgemisch mit einem Gehalt an nichtflüchtigen organischen Verbindungen über 80 Gew.-%, vorzugsweise mindestens 90 Gew.-%, umfassend ein Reaktivsystem von
- einer polyisocyanatfunktionellen Verbindung oder Polymer, und
- einer Dispersion einer Verbindung, die reaktiven Wasserstoff in einem Material enthält, das gegenüber der Verbindung, die aktiven Wasserstoff enthält, nicht reaktiv ist, oder ein feines Pulver einer Verbindung, die reaktiven Wasserstoff enthält, auf ein Substrat aufgebracht wird, was zu einem mit dem Formulierungsgemisch beschichteten Substrat führt, gefolgt vom Reagieren der oben genannten Verbindungen durch Erhöhen der Temperatur, wobei mehr als 40 % des Kohlenstoffs in der kombinierten Menge des Formulierungsgemischs moderner Kohlenstoff gemäß ASTM D6866 ist und wobei flüchtige organische Verbindungen (VOC) als jede organische Verbindung mit einem Anfangssiedepunkt von weniger als oder gleich 250 °C, gemessen bei einem Standardatmosphärendruck von 101,3 kPa, definiert sind und wobei die Verbindung, die reaktiven Wasserstoff enthält, ausgewählt wird aus einem Polyhydrazid und/oder Polysemicarbazid und/oder Piperazin.

2. Verfahren nach Anspruch 1, wobei die den reaktiven Wasserstoff enthaltende Verbindung eine Verbindung ist, die bei einer Temperatur unter 30°C kristallin ist.

3. Verfahren nach Anspruch 1 oder 2, wobei die reaktiven Wasserstoff enthaltende Verbindung Adipinsäuredihydrazid und/oder Malonsäuredihydrazid und/oder Carbodihydrazid ist.

4. Verfahren nach einem der Ansprüche 1 bis 3, wobei das Material, das gegenüber der reaktiven Wasserstoff enthaltenden Verbindung nicht reaktiv ist, modernen Kohlenstoff gemäß ASTM D6866 enthält, wie Rizinusöl.

5. Verfahren nach einem der Ansprüche 1 bis 4, wobei die polyisocyanatfunktionelle Verbindung oder das Polymer unter Verwendung einer oder mehrerer Polyolkomponenten hergestellt werden, die modernen Kohlenstoff gemäß ASTM D6866 enthalten.

6. Verfahren nach einem der Ansprüche 1 bis 5, wobei die polyisocyanatfunktionelle Verbindung oder das Polymer hergestellt werden unter Verwendung von Polytrimethylenetherpolyol (PO3G) aus Propandiol biologischen Ursprungs, von Fettsäuren stammenden Polyolen, Polyolen auf Rizinusölbasis, von Bernsteinsäure stammenden Polyesterpolyolen, von Sebacinsäure stammenden Polyesterpolyolen, von Azelainsäure stammenden Polyesterpolyolen oder biobasierten Polycarbonatpolyolen, aus abgeschiedenem Kohlendioxid synthetisierten Polyolen, wenn die Quelle des Kohlendioxids ganz oder zu einem wesentlichen Teil aus biologischen Produkten oder erneuerbaren land- oder forstwirtschaftlichen Materialien ist, oder einer Kombination davon als eine oder mehrere Polyolkomponenten, die modernen Kohlenstoff gemäß ASTM D6866 enthalten.

7. Verfahren nach einem der Ansprüche 5 oder 6, wobei die eine oder mehreren Polyolkomponenten, die modernen Kohlenstoff gemäß ASTM D6866 enthalten, ein Polyesterpolyol umfassen, das modernen Kohlenstoff gemäß ASTM D6866 enthält, der in der Gesamtmenge der Polyole, die zur Herstellung der polyisocyanatfunktionellen Verbindung oder des Polymers verwendet werden, in einer Menge von unter 90 Gew.-%, vorzugsweise unter 70 Gew.-%, vorhanden ist.

8. Verfahren nach einem der Ansprüche 5, 6 oder 7, wobei eine Kombination aus Polyetherpolyol, das vorzugsweise modernen Kohlenstoff gemäß ASTM D6866 enthält, und Polyesterpolyol, das modernen Kohlenstoff gemäß ASTM D6866 enthält, in einem Gewichtsverhältnis zwischen 90/10 bis 10/90, vorzugsweise in einem Gewichtsverhältnis zwischen 70/30 bis 30/70, bevorzugter in einem Gewichtsverhältnis zwischen 65/35 und 35/65 verwendet wird.

9. Verfahren zur Herstellung einer Beschichtung, eines beschichteten Substrats, eines Klebstoffs, einer Folie oder eines Blattes, wobei in dem Verfahren ein Formulierungsgemisch mit einem Gehalt an nichtflüchtigen organischen Verbindungen von über 80 Gew.-% und umfassend ein reaktives System von einem blockierten Prepolymer oder blockierten Polymer, in dem die isocyanatfunktionellen Gruppen blockiert worden sind, und einer Dispersion oder einem feinen Pulver einer Verbindung, die einen reaktiven Wasserstoff enthält, ausgewählt aus einem Polyhydrazid und/oder Polysemicarbazid und/oder Piperazin, auf ein Substrat aufgebracht wird, was zu einem mit der Beschichtungsmischung beschichteten Substrat führt, gefolgt vom Reagieren der oben genannten Verbindungen durch Erhöhen der Temperatur auf eine Temperatur, die hoch genug ist, um das blockierte Prepolymer oder das blockierte Polymer zu deblockieren, um die Isocyanatgruppen freizusetzen, so dass die Isocyanatgruppen mit der Verbindung reagieren können, die einen reaktiven Wasserstoff enthält, wobei mehr als 40 % des Kohlenstoffs der kombinierten Menge der Polymermischungen moderner Kohlenstoff gemäß ASTM D6866 ist und wobei flüchtige organische Verbindungen (VOC) als irdendeine organische Verbindung mit einem Anfangssiedepunkt von weniger als oder gleich 250°C definiert sind, gemessen bei einem Standardatmosphärendruck von 101,3 kPa.

10. Verfahren nach einem der Ansprüche 1 bis 9, wobei die Temperatur auf einen Wert zwischen 110°C und 180°C, vorzugsweise 120°C und 170°C, erhöht wird.

11. Verfahren nach einem der Ansprüche 1 bis 10, wobei das gesamte Formulierungsgemisch kein Lösungsmittel enthält und somit frei von flüchtigen organischen Verbindungen (VOC) ist.

12. Verfahren nach einem der Ansprüche 1 bis 11, wobei mehr als 45 % oder vorzugsweise mehr als 50 % des Kohlenstoffs der kombinierten Menge des Formulierungsgemischs moderner Kohlenstoff gemäß ASTM D6866 ist.

13. Beschichtung, beschichtetes Substrat, Klebstoff, Folie oder Blatt, erhältlich durch das Verfahren wie in einem der Ansprüche 1 bis 12 definiert.

14. Schichtstruktur, von der mindestens eine Schicht eine Beschichtung, ein beschichtetes Substrat, einen Klebstoff, einen Film oder ein Blatt wie in Anspruch 13 definiert, umfasst und optional umfassend eine oder mehrere Schichten, die keinen modernen Kohlenstoff gemäß ASTM D6866 enthalten.

## Revendications

1. Procédé de préparation d'un revêtement, d'un substrat revêtu, d'un adhésif, d'un film ou d'une feuille, dans lequel procédé un mélange de formulation ayant une teneur en composés organiques non volatils de plus de 80 % en poids, de préférence d'au moins 90 % en poids, comprenant un système réactif de
- un composé ou polymère fonctionnel polyisocyanate, et
- une dispersion d'un composé contenant de l'hydrogène réactif dans une matière qui est non réactive vis-à-vis du composé contenant de l'hydrogène actif, ou une poudre fine d'un composé contenant de l'hydrogène réactif est appliquée sur un substrat, permettant d'obtenir un substrat revêtu du mélange de formulation, opération suivie par la mise en réaction des composés susmentionnés par élévation de la température, dans lequel plus de 40 % du carbone dans la quantité combinée du mélange de formulation est du carbone moderne selon ASTM D6866 et dans lequel les composés organiques volatils (VOC) sont définis comme tout composé organique ayant un point d'ébullition initial inférieur ou égal à 250 °C mesuré à une pression atmosphérique standard de 101,3 kPa et dans lequel le composé contenant de l'hydrogène réactif est choisi parmi un polyhydrazide et/ou un polysemicarbazide et/ou une pipérazine.

2. Procédé selon la revendication 1, dans lequel le composé contenant l'hydrogène réactif est un composé qui est cristallin à une température inférieure à 30 °C.

3. Procédé selon la revendication 1 ou 2, dans lequel le composé contenant de l'hydrogène réactif est un polyhydrazide d'acide adipique et/ou un dihydrazide d'acide adipique et/ou un dihydrazide d'acide malonique et/ou un carbodihydrazide.

4. Procédé selon l'une quelconque des revendications 1 à 3, dans lequel la matière qui est non réactive vis-à-vis du composé contenant de l'hydrogène réactif contient un carbone moderne selon ASTM D6866, telle que l'huile de ricin.

5. Procédé selon l'une quelconque des revendications 1 à 4, dans lequel le composé ou polymère fonctionnel polyisocyanate est préparé à l'aide d'un ou plusieurs composants polyol qui contiennent du carbone moderne selon ASTM D6866.

6. Procédé selon l'une quelconque des revendications 1 à 5, dans lequel le composé ou polymère fonctionnel polyisocyanate est préparé à l'aide de polyol de polytriméthylène éther (PO3G) provenant de propanediol bio-dérivé, de polyols dérivés d'acides gras, de polyols à base d'huile de ricin, de polyols de polyester dérivés d'acide succinique, de polyols de polyester dérivés d'acide sébacique, de polyols de polyester dérivés d'acide azélaïque ou de polyols de polycarbonate biosourcés, de polyols synthétisés à partir de dioxyde de carbone capturé si la source du dioxyde de carbone est, en totalité ou en partie significative, provient de produits biologiques ou de matières agricoles ou forestières renouvelables, ou d'une combinaison de ceux-ci en tant qu'un ou plusieurs composants de polyol qui contiennent du carbone moderne selon ASTM D6866.

7. Procédé selon l'une quelconque des revendications 5 ou 6, dans lequel les un ou plusieurs composants polyol qui contiennent du carbone moderne selon ASTM D6866 comprennent un polyol de polyester contenant du carbone moderne selon ASTM D6866 qui est présent dans la quantité totale de polyols utilisée pour préparer le composé ou polymère fonctionnel polyisocyanate dans une quantité de moins de 90 % en poids, de préférence de moins de 70 % en poids.

8. Procédé selon l'une quelconque des revendications 5, 6 ou 7, dans lequel un mélange de polyol polyéther contenant de préférence du carbone moderne selon ASTM D6866 et de polyol polyester contenant du carbone moderne selon ASTM D6866 est utilisé dans un rapport pondéral compris entre 90/10 et 10/90, de préférence dans un rapport pondéral compris entre 70/30 et 30/70, plus préférablement dans un rapport pondéral compris entre 65/35 et 35/65.

9. Procédé de préparation d'un revêtement, d'un substrat revêtu, d'un adhésif, d'un film ou d'une feuille, dans lequel procédé un mélange de formulation ayant un contenu de composés organiques non volatils supérieur à 80 % en poids et comprenant un système réactif d'un prépolymère bloqué ou polymère bloqué, dans lequel les groupes fonctionnels isocyanate ont été bloqués, et d'une dispersion ou poudre fine d'un composé contenant un hydrogène réactif choisi parmi un polyhydrazide et/ou un polysemicarbazide et/ou une pipérazine est appliqué sur un substrat, permettant d'obtenir un substrat revêtu du mélange de revêtement, opération suivie par la mise en réaction des composés susmentionnés par élévation de la température à une température suffisamment élevée pour débloquer le prépolymère bloqué ou polymère bloqué pour libérer les groupes isocyanate se sorte que les groupes isocyanate peuvent alors réagir avec le composé contenant un hydrogène réactif, dans lequel plus de 40 % du carbone dans la quantité combinée des mélanges de polymères est du carbone moderne selon ASTM D6866 et dans lequel les composés organiques volatils (VOC) sont définis comme tout composé organique ayant un point d'ébullition initial inférieur ou égal à 250 °C mesuré à une pression atmosphérique standard de 101,3 kPa.

10. Procédé selon l'une quelconque des revendications 1 à 9, dans lequel la température est élevée jusqu'à une valeur entre 110 °C et 180 °C, de préférence 120 °C et 170 °C.

11. Procédé selon l'une quelconque des revendications 1 à 10, dans lequel le mélange de formulation total ne contient pas de solvant et est ainsi exempt de composés organiques volatils (COV).

12. Procédé selon l'une quelconque des revendications 1 à 11, dans lequel plus de 45 %, ou de préférence plus de 50 %, du carbone dans la quantité combinée du mélange de formulation est du carbone moderne selon ASTM D6866.

13. Revêtement, substrat revêtu, adhésif, film ou feuille pouvant être obtenu(e) par le procédé tel que défini dans l'une quelconque des revendications 1 à 12.

14. Structure multicouche dont au moins une couche comprend un revêtement, un substrat revêtu, un adhésif, un film ou une feuille tel(le) que défini(e) dans la revendication 13 et comprenant éventuellement une ou plusieurs couches qui ne contiennent pas de carbone moderne selon ASTM D6866.
